# FASCICULE DE BREVET EUROPEEN

(11) **EP 3 549 860 B1**
(45) Date de publication et mention de la délivrance du brevet: **28.10.2020**
(21) Numéro de dépôt: 19165310.4
(22) Date de dépôt: 26.03.2019
(51) Int. Cl.: B64C 25/12, B64C 25/34, B64C 25/60

(54) **ATTERISSEUR D'AERONEF À REPLIAGE**
AUSKLAPPBARES FAHRWERK EINES FLUGZEUGS
FOLDING AIRCRAFT UNDERCARRIAGE

(30) Priorité: 04.04.2018 FR 1852932
(43) Date de publication de la demande: 09.10.2019
(73) Titulaire: Safran Landing Systems, 78140 Vélizy-Villacoublay (FR)
(72) Inventeur: ANTONI, Nicolas, 77550 MOISSY-CRAMAYEL (FR); RAIMBAULT, Vincent, 77550 MOISSY-CRAMAYEL (FR)
(74) Mandataire: Lavialle, Bruno François Stéphane

(56) Documents cités:
- EP-A1- 0 631 929
- WO-A1-2011/157807
- US-A- 2 811 326

## Description

L'invention concerne un atterrisseur d'aéronef dont l'encombrement transversal peut être diminué en position rétractée pour faciliter son stockage en soute.

### ARRIERE PLAN DE L'INVENTION

On connaît des atterrisseurs montés mobiles sur un aéronef entre une position déployée et une position rétractée comportant plusieurs roues, notamment des atterrisseurs munis d'un bogie pour porter quatre roues ou plus. Ces atterrisseurs, notamment s'ils portent des roues freinées, sont larges et occupent un volume important en soute lorsqu'ils sont rétractés. EP 0 631 929 A1divulgue un atterrisseur d'aéronef rétractable latéralement.

### OBJET DE L'INVENTION

L'invention vise à proposer un atterrisseur d'aéronef dont l'encombrement latéral peut être réduit lors de sa rétraction pour faciliter son stockage en soute.

### PRESENTATION DE L'INVENTION

En vue de la réalisation de ce but, on propose un atterrisseur d'aéronef portant au moins deux roues et destiné à être monté mobile sur une structure d'aéronef entre une position déployée et une position rétractée. Selon l'invention, les roues sont montées tournantes sur des essieux portés par des bras articulés en partie basse d'un caisson de l'atterrisseur, chaque bras étant associé à un amortisseur attelé d'une part au bras et d'autre part à un collier qui s'étend autour du caisson et qui est monté coulissant sur le caisson entre une position haute dans laquelle le collier est en appui contre une butée du caisson lorsque l'atterrisseur est en position déployée, et une position basse vers laquelle le collier est amené lors de la manœuvre de l'atterrisseur de la position déployée à la position rétractée, de sorte à rapprocher les roues.

Quand l'atterrisseur est en position déployée et l'aéronef est au sol, les efforts provenant des roues sont transmis en étant filtrés par les amortisseurs au collier, qui transmet ces efforts au caisson via la butée. L'amenée du collier en position basse lors de la manoeuvre de l'atterrisseur vers la position rétractée rapproche les roues de l'axe central du caisson, ce qui diminue l'encombrement latéral de l'atterrisseur, ce qui facilite donc son stockage en vol dans une soute de l'aéronef.

Selon un aspect particulier de l'invention, le collier est relié par une biellette à un organe de contreventement à deux éléments articulés destiné à stabiliser l'atterrisseur en position déployée.

En position déployée, les deux éléments de l'organe de contreventement sont maintenus en position alignée, ce qui stabilise le caisson. La biellette maintient le collier en position haute, à proximité immédiate ou en appui contre la butée du caisson. Lors de la manœuvre de l'atterrisseur vers la position rétractée, l'alignement des deux éléments de l'organe de contreventement est brisé, et on exploite le mouvement relatif de l'un de ces deux éléments relativement au caisson pour faire en sorte que la biellette pousse le collier vers la position basse, ce qui rapproche les roues et diminue l'encombrement latéral de l'atterrisseur. Ainsi, il n'y a besoin d'aucun actionneur spécifique, ni d'aucun verrouillage du collier. Pendant la manœuvre de déploiement, la biellette tire sur le collier pour le ramener en position haute, ce qui écarte les roues et les ramène à leur position d'atterrissage.

### DESCRIPTION DES FIGURES

L'invention sera mieux comprise à la lumière de la description qui suit de modes particuliers de réalisation de l'invention, en référence aux figures des dessins annexés, parmi lesquelles :
- La figure 1 est une vue de côté d'un atterrisseur à quatre roues et deux bras selon un premier mode particulier de réalisation de l'invention, vu ici en position déployée alors que l'aéronef est en vol;
- La figure 2 est une vue de face de l'atterrisseur de la figure 1 ;
- La figure 3 est une vue de face de l'atterrisseur de la figure 1, en position rétractée ;
- La figure 4 est une vue de de l'atterrisseur selon la flèche IV de la figure 3 alors qu'il est en position rétractée ;
- La figure 5 est une vue de face d'un atterrisseur à deux roues et deux bras selon un deuxième mode particulier de l'invention, vu ici en position déployée alors que l'aéronef est en vol ;
- La figure 6 est une vue de face de l'atterrisseur de la figure 5, vu ici en position déployée alors que l'aéronef est au sol ;
- La figure 7 est une vue de face de l'atterrisseur de la figure 5, vu ici en position rétractée ;
- La figure 8 est une vue de dessus schématique d'un atterrisseur à quatre roues et quatre bras selon un troisième mode particulier de réalisation de l'invention ;
- La figure 9 est une vue de dessus schématique d'un atterrisseur à quatre roues et quatre bras selon un quatrième mode particulier de réalisation de l'invention.

### DESCRIPTION DETAILLEE DE L'INVENTION

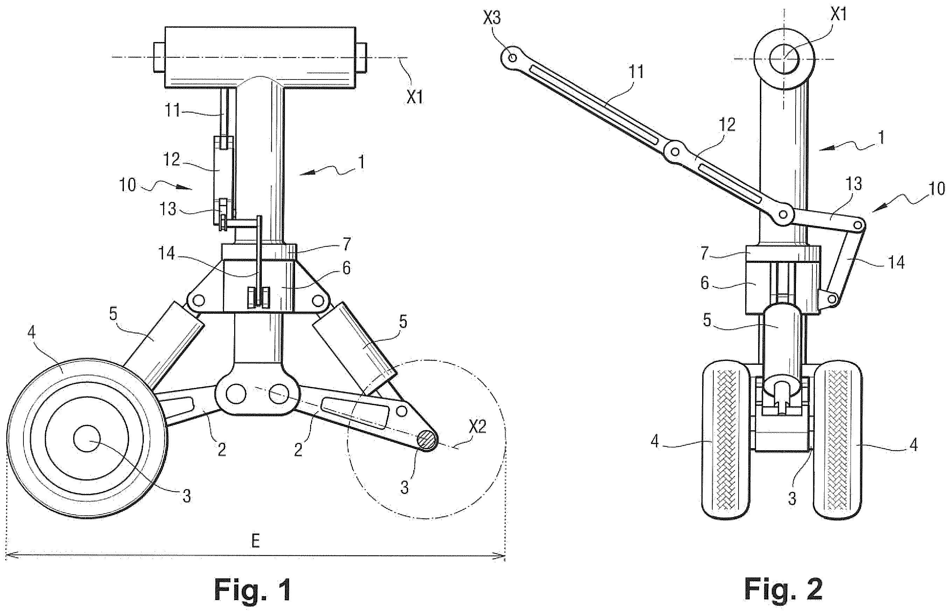

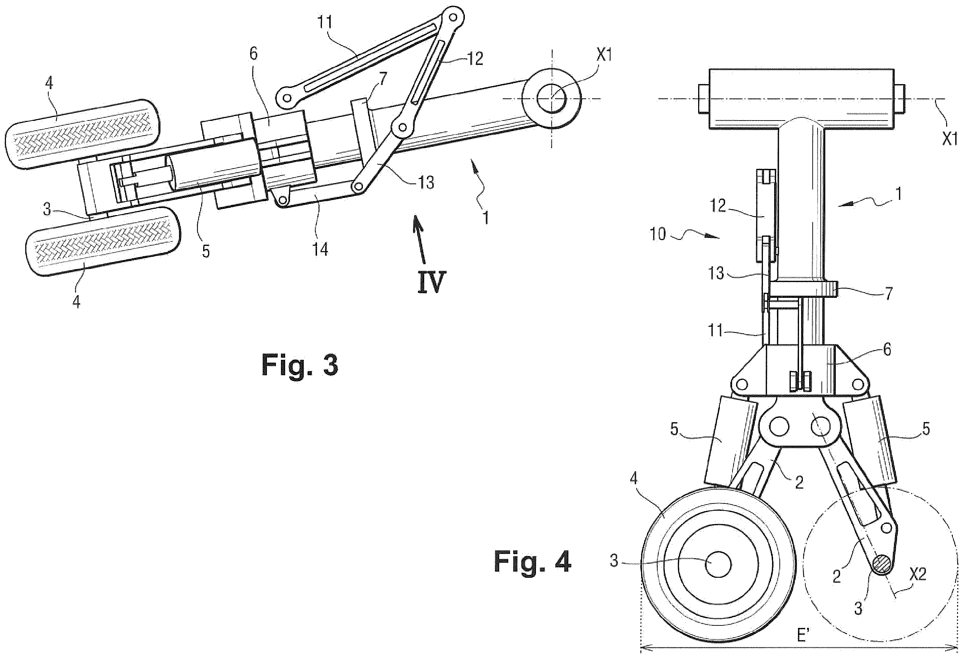

Conformément à un premier mode particulier de réalisation de l'invention illustré aux figures 1 à 4, l'atterrisseur illustré comporte un caisson 1 articulé sur la structure de l'aéronef selon un axe X1 de sorte que l'atterrisseur soit mobile entre une position déployée illustrée sur les figures 1 et 2, et une position rétractée illustrée sur les figures 3 et 4. L'actionneur de manœuvre n'a pas été représenté pour plus de clarté. Sur la partie basse du caisson 1 sont articulés deux bras 2 selon des axes X2 sensiblement horizontaux lorsque l'atterrisseur est en position déployée. Les bras 2 s'étendent ici vers l'avant et vers l'arrière par référence à un sens d'avancement de l'aéronef. Ici chacun des bras 2 porte un essieu 3 recevant deux roues 4 à rotation (l'une des roues a été omise sur les figures 1 et 4 pour plus de clarté). Des amortisseurs 5 sont chacun attelés entre chacun des bras 2 et un collier 6 s'étendant autour du caisson 1 pour absorber l'énergie cinétique verticale de l'aéronef à l'atterrissage et filtrer les irrégularités du sol au roulage.

Selon l'invention, le collier 6 est monté coulissant sur le caisson 1 entre une position haute illustrée aux figures 1 et 2 dans laquelle le collier 6 est en appui contre une butée haute 7 du caisson 1, et une position basse illustrée aux figures 3 et 4. Le coulissement du collier 6 lors de la manœuvre de rétraction a pour effet de faire passer l'encombrement latéral E de l'atterrisseur en position déployée à un encombrement latéral E' plus faible en position rétractée par rapprochement des roues, ce qui facilite son stockage en soute en position rétractée.

Le collier 6 peut être déplacé par tout moyen d'actionnement, notamment par un actionneur dédié, ce qui impose une séquence d'actionnement. Ici, et selon une disposition particulière de l'invention, on exploite le mouvement relatif d'un des éléments d'un organe de contreventement 10 du caisson 1 pour déplacer le collier 6. Plus précisément, l'organe de contreventement est ici une contrefiche à alignement comportant deux éléments 11,12 articulés entre eux, le premier élément 12 étant par ailleurs articulé sur la structure de l'aéronef, tandis que le deuxième élément 12 est articulé sur le caisson selon un axe X3. Ces deux éléments 11, 12 viennent en alignement lorsque l'atterrisseur est en position déployée et y sont maintenus par un organe de stabilisation non représenté. Le collier 6 est attelé à une corne 13 du deuxième élément de contreventement 12 au moyen d'une biellette 14 de sorte qu'en position déployée, la biellette 14 contraigne le collier 6 à se trouver à proximité immédiate ou contre la butée 7 du caisson 1. On pourra prévoir entre la bielle 14 et le collier 6 un organe élastique ou un mécanisme à lumière de sorte que les efforts provenant de l'appui des roues au sol confirment le collier 6 contre la butée 7 sans introduire dans l'organe de contreventement 10 des efforts sollicitant inutilement celui-ci.

Lors de la manœuvre de l'atterrisseur vers la position rétractée illustrée aux figures 3 et 4, l'alignement des éléments 11,12 de l'organe de contreventement 10 est brisé, provoquant un mouvement de rotation relative entre le deuxième élément 12 et le caisson 1 autour de l'axe X3. Ce mouvement provoque le coulissement du collier 6 poussé par la biellette 14 vers sa position basse sur le caisson 1. Ce coulissement a pour effet de rapprocher les roues 4, diminuant ainsi l'encombrement latéral de l'atterrisseur. Le déplacement et le maintien du collier 6 par l'organe de contreventement 10 permet de se passer de tout organe d'actionnement dédié, ainsi que de tout organe de verrouillage du collier.

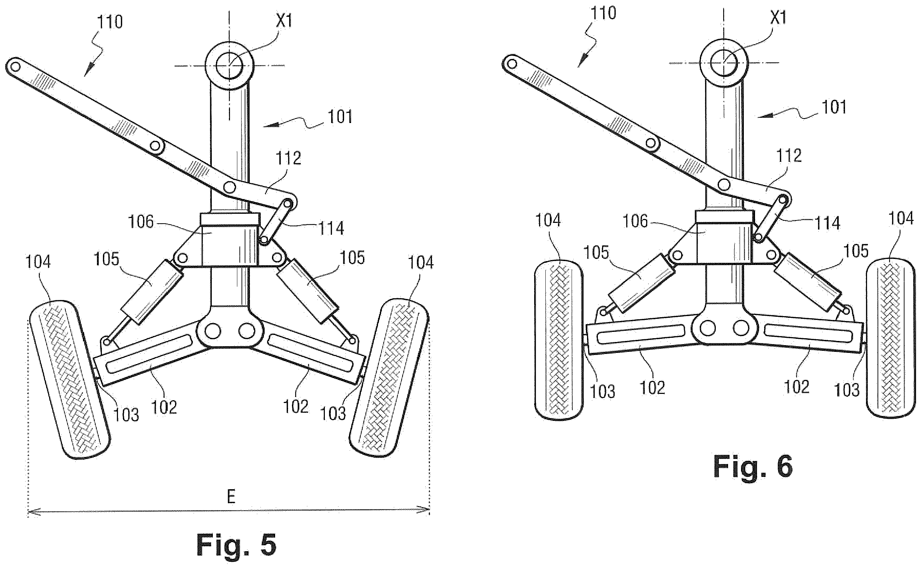

Selon maintenant un deuxième mode particulier de réalisation de l'invention illustré aux figures 5 à 7 et sur lesquelles les références des éléments communes au mode de réalisation précédent sont augmentées d'une centaine, le caisson 101 est toujours articulé selon un axe X1 sur la structure de l'aéronef. Il porte ici deux bras 102 articulés en partie basse du caisson 101, mais s'étendant latéralement par référence à un sens d'avancement de l'aéronef. Ici chacun des bras 102 porte un essieu 103 portant à rotation une unique roue 104. En position déployée en vol illustré à la figure 5, le plan des roues est oblique, mais il se redresse au sol comme illustré à la figure 6 quand les amortisseurs sont compressés sous l'effet du poids de l'aéronef. Des amortisseurs 105 sont attelés aux bras 102, et à un collier 106 monté coulissant sur le caisson 101. Comme précédemment le collier 106 est maintenu en position haute lorsque l'atterrisseur est en position déployée, et ramené en position basse lorsque l'atterrisseur est en position rétractée, ce qui a pour effet de diminuer l'encombrement latéral de l'atterrisseur. La position du collier 106 est également commandée par l'élément 112 de l'organe de contreventement 110 qui est articulé sur le caisson 101 au moyen d'une biellette 114 attelée à l'élément 112 et au collier 106, selon le même mode d'actionnement.

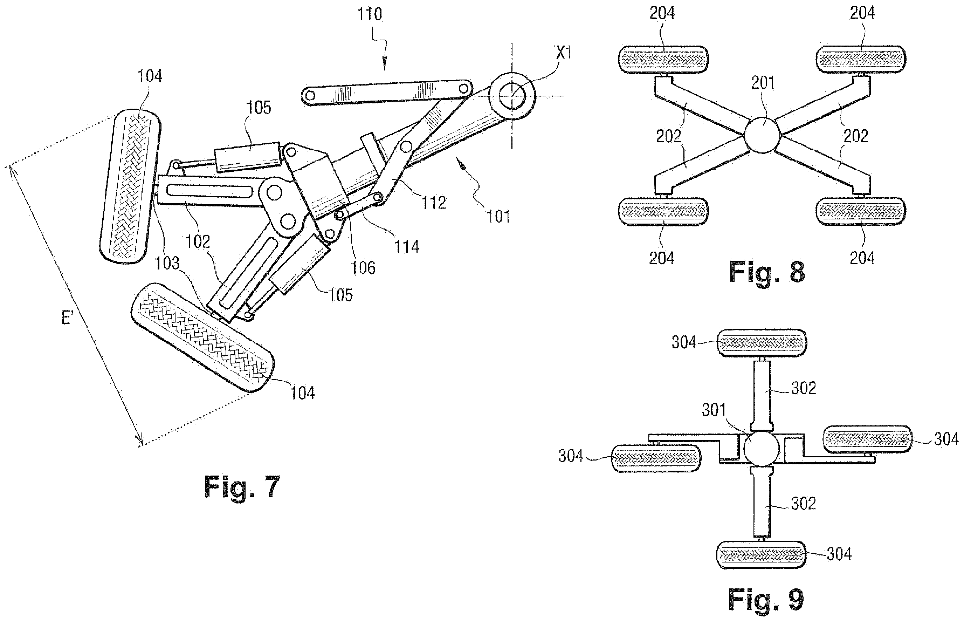

L'invention est applicable à tout type d'agencement de roues sur l'atterrisseur. Les figures 8 et 9 montrent l'application de l'invention à des atterrisseurs à quatre roues 204,304 dont chacune est portée par un bras. Sur la figure 9, deux des bras 302 s'étendent longitudinalement et deux des bras 302 s'étendant transversalement par référence à un sens d'avancement de l'aéronef pour proposer une disposition des roues 304 en croix. Les axes d'articulation des bras 303 sur le bas du caisson 301 sont toujours sensiblement horizontaux lorsque l'atterrisseur est en position déployée, et ils s'étendent longitudinalement et latéralement par référence à un sens d'avancement de l'aéronef. Sur la figure 8, les bras 202 s'étendent selon des directions obliques par référence à un sens d'avancement de l'aéronef pour proposer une disposition des bras en croix qui conduit à une disposition des roues 204 plus classique qui serait celle d'un atterrisseur à bogie à quatre roues. Les axes d'articulation des bras 203 sur le bas du caisson 201 sont toujours sensiblement horizontaux lorsque l'atterrisseur est en position déployée, et ils s'étendent obliquement par référence à un sens d'avancement de l'aéronef. L'on peut bien entendu appliquer l'invention à un atterrisseur à six roues.

Selon une disposition pratique, le collier est réalisé entre deux parties assemblées autour d'une partie cylindrique du caisson. On prévoira avantageusement une liaison coulissante sans possibilité de rotation du collier, par exemple en retenant un profil non circulaire pour la partie cylindrique du caisson sur laquelle le collier coulisse.
L'invention n'est pas limitée à ce qui vient d'être décrit, mais englobe au contraire toute variante entrant dans le cadre défini par les revendications. En particulier, on pourra appliquer l'invention à une jambe d'atterrisseur contreventée par deux contrefiches. De plus, on pourra commander le collier indépendamment de la ou les contrefiches. Le maintien du collier en position haute ou basse et son déplacement de l'une à l'autre des positions pourra être effectué par tout moyen. On pourra notamment utiliser un actionneur et des moyens de verrouillage dédiés, ou encore exploiter le mouvement relatif entre la structure de l'aéronef et le caisson lors de la manœuvre de l'atterrisseur de la position déployée à la position rétractée, par exemple en utilisant une bielle articulée d'une part sur la structure de l'aéronef et d'autre part sur le collier. De façon générale, tout autre mouvement relatif permettant de déplacer le collier de la position haute à la position basse pourra être exploité. La liaison entre le collier et l'élément dont on exploite le mouvement relatif pourra être réalisée par tout moyen mécanique tel que biellette, crémaillère.

## Revendications

1. Atterrisseur d'aéronef portant au moins deux roues (4;104;204;304), et destiné à être monté mobile sur une structure d'aéronef entre une position déployée et une position rétractée, tel que les roues sont montées tournantes sur des essieux (3;103) portés par des bras (2;102;202;302) articulés en partie basse d'un caisson (1;101;201;301) de l'atterrisseur, chaque bras étant associé à un amortisseur (5;105) attelé d'une part au bras et d'autre part à un collier (6;106) qui s'étend autour du caisson et qui est monté coulissant sur le caisson entre une position haute dans laquelle le collier est en appui contre une butée (7;107) du caisson lorsque l'atterrisseur est en position déployée, et une position basse vers laquelle le collier est amené lors de la manœuvre de l'atterrisseur de la position déployée à la position rétractée, de sorte à rapprocher les roues.

2. Atterrisseur selon la revendication 1, dans lequel le collier (6;106) est relié à un élément (12;112) d'un organe de contreventement (10;110) de l'atterrisseur, de sorte que le collier est déplacé par l'effet d'un mouvement relatif de l'élément de l'organe de contreventement et du caisson.

3. Atterrisseur selon la revendication 2, dans lequel le collier (6;106) est relié par une biellette (14;114) à l'élément (12;112) de l'organe de contreventement qui est articulé sur le caisson (1;101).

4. Atterrisseur selon la revendication 1, dans lequel le collier est en deux parties et est assemblé autour d'une partie cylindrique du caisson.

5. Atterrisseur selon la revendication 1, dans lequel les bras (2) sont au nombre de deux et s'étendent longitudinalement par rapport à un sens d'avancement de l'aéronef et portant chacun deux roues (4).

6. Atterrisseur selon la revendication 1, dans lequel les bras (102) sont au nombre de deux et s'étendent transversalement par rapport à un sens d'avancement de l'aéronef et portant chacun une roue (102) .

7. Atterrisseur selon la revendication 1, dans lequel les bras (302) sont au nombre de quatre et portent chacun une roue (304), deux bras (302) s'étendant longitudinalement et deux bras (302) s'étendant tranversalement par rapport à un sens d'avancement de l'aéronef selon une disposition en croix.

8. Atterrisseur selon la revendication 1, dans lequel les bras (202) sont au nombre de quatre et portent chacun une roue (204), les bras s'étendant obliquement par rapport à un sens d'avancement de l'aéronef selon une disposition en croix.

## Patentansprüche

1. Luftfahrzeugfahrwerk, das mindestens zwei Räder (4; 104; 204; 304) trägt und dazu bestimmt ist, an einer Luftfahrzeugstruktur beweglich zwischen einer ausgefahrenen Position und einer eingefahrenen Position gelagert zu sein, wobei die Räder drehbar auf Achsen (3; 103) gelagert sind, die von Armen (2; 102; 202; 302) getragen werden, die im unteren Teil eines Kastens (1; 101; 201; 301) des Fahrwerks angelenkt sind, wobei jeder Arm mit einem Stoßdämpfer (5; 105) verbunden ist, der einerseits an dem Arm und andererseits an einer Schelle (6; 106) befestigt ist, die sich um den Kasten herum erstreckt und die an dem Kasten zwischen einer oberen Position, in der die Schelle in Anlage an einem Anschlag (7; 107) des Kastens ist, wenn das Fahrwerk in der ausgefahrenen Position ist, und einer unteren Position verschiebbar gelagert ist, in die die Schelle während der Verstellung des Fahrwerks von der ausgefahrenen Position in die eingefahrene Position gebracht wird, sodass die Räder einander angenähert werden.

2. Fahrwerk nach Anspruch 1, bei dem die Schelle (6; 106) mit einem Element (12; 112) eines Versteifungsorgans (10; 110) des Fahrwerks derart verbunden ist, dass die Schelle durch die Wirkung einer Relativbewegung des Elements des Versteifungsorgans und des Kastens verschoben wird.

3. Fahrwerk nach Anspruch 2, bei dem die Schelle (6; 106) durch eine Stange (14; 114) mit dem Element (12; 112) des Versteifungsorgans verbunden ist, das an dem Kasten (1; 101) angelenkt ist.

4. Fahrwerk nach Anspruch 1, bei dem die Schelle aus zwei Teilen ist und um einen zylindrischen Teil des Kastens herum montiert ist.

5. Fahrwerk nach Anspruch 1, bei dem die Arme (2) zwei an der Zahl sind und sich relativ zu einer Vorwärtsrichtung des Luftfahrzeugs in Längsrichtung erstrecken und jeweils zwei Räder (4) tragen.

6. Fahrwerk nach Anspruch 1, bei dem die Arme (102) zwei an der Zahl sind und sich relativ zu einer Vorwärtsrichtung des Luftfahrzeugs quer erstrecken und jeweils ein Rad (102) tragen.

7. Fahrwerk nach Anspruch 1, bei dem die Arme (302) vier an der Zahl sind und jeweils ein Rad (304) tragen, wobei sich zwei Arme (302) in Längsrichtung und sich zwei Arme (302) in Querrichtung relativ zu einer Vorwärtsrichtung des Luftfahrzeugs in einer Kreuzanordnung erstrecken.

8. Fahrwerk nach Anspruch 1, bei dem die Arme (202) vier an der Zahl sind und jeweils ein Rad (204) tragen, wobei sich die Arme relativ zu einer Vorwärtsrichtung des Luftfahrzeugs in einer Kreuzanordnung schräg erstrecken.

## Claims

1. An aircraft undercarriage carrying at least two wheels (4; 104; 204; 304) and for mounting on an aircraft structure to be movable between a deployed position and a retracted position, the undercarriage being **characterized in that** the wheels are rotatably mounted on axles (3; 103) carried by arms (2; 102; 202; 302) hinged to a bottom portion of a strut-leg (1; 101; 201; 301) of the undercarriage, each arm being associated with a shock absorber (5; 105) coupled firstly to the arm and secondly to a collar (6; 106) that extends around the strut-leg and that is mounted to slide on the strut-leg between a high position in which the collar bears against an abutment (7; 107) of the strut-leg when the undercarriage is in the deployed position and a low position into which the collar is taken when the undercarriage is moved from the deployed position to the retracted position, so as to bring the wheels closer together.

2. An undercarriage according to claim 1, wherein the collar (6; 106) is connected to an element (12; 112) of a brace member (10; 110) of the undercarriage in such a manner that the collar is moved by the effect of relative movement between the strut-leg and the element of the brace member.

3. An undercarriage according to claim 2, wherein the collar (6; 106) is connected by a link (14; 114) to the element (12; 112) of the brace member that is hinged to the strut-leg (1; 101).

4. An undercarriage according to claim 1, wherein the collar is made of two parts and is assembled around a cylindrical portion of the strut-leg.

5. An undercarriage according to claim 1, wherein the arms (2) are two in number and they extend longitudinally relative to a direction of advance of the aircraft, each arm carrying two wheels (4).

6. An undercarriage according to claim 1, wherein the arms (102) are two in number and they extend laterally relative to a direction of advance of the aircraft, each of them carrying one wheel (102).

7. An undercarriage according to claim 1, wherein the arms (302) are four in number and each carries one wheel (304), two arms (302) extending longitudinally and two arms (302) extending laterally relative to a direction of advance of the aircraft in a cross-configuration.

8. An undercarriage according to claim 1, wherein the arms (202) are four in number and each carries one wheel (204), the arms extending obliquely relative to a direction of advance of the aircraft in a cross-configuration.
